# EUROPÄISCHE PATENTSCHRIFT

(11) **EP 4 146 488 B1**
(45) Veröffentlichungstag und Bekanntmachung des Hinweises auf die Patenterteilung: **11.06.2025**
(21) Anmeldenummer: 21721442.8
(22) Anmeldetag: 21.04.2021
(51) Int. Cl.: B60G 17/08, B60T 8/1755, B60G 17/016, B60G 17/0195

(54) **FAHRDYNAMIKREGELUNG EINES FAHRZEUGS MITTELS DÄMPFERN**
CONTROLLING DRIVING DYNAMICS OF A VEHICLE BY MEANS OF DAMPERS
COMMANDE DE LA DYNAMIQUE DE CONDUITE D'UN VÉHICULE AU MOYEN D'AMORTISSEURS

(30) Priorität: 06.05.2020 DE 102020205702
(43) Veröffentlichungstag der Anmeldung: 15.03.2023
(73) Patentinhaber: Volkswagen AG, 38440 Wolfsburg (DE)
(72) Erfinder: LAUMANNS, Nando, 38442 Wolfsburg (DE)
(86) Internationale Anmeldenummer: PCT/EP2021/060362
(87) Internationale Veröffentlichungsnummer: WO 2021/224005

(56) Entgegenhaltungen:
- DE-A1- 102004 040 876
- DE-A1- 102018 203 182
- JP-A- 2013 049 362
- US-A1- 2006 074 533
- US-A1- 2008 183 353

## Beschreibung

Die Erfindung betrifft ein Verfahren zur Fahrynamikregelung eines Fahrzeugs, insbesondere eines Kraftfahrzeugs, wie zum Beispiel eines Personenkraftwagens oder Lastkraftwagens. Die Fahrdynamikregelung erfolgt dabei ausschließlich mittels Dämpfern an den Fahrzeugrädern. Insbesondere können die Querdynamik und ferner insbesondere das Gierverhalten des Fahrzeugs und insbesondere ein Wank-Giermoment geregelt werden. Ferner betrifft die Erfindung ein Fahrzeug und eine Regeleinrichtung, die eine solche Fahrdynamikregelung aufweisen bzw. bereitstellen.

Es ist bekannt, die Räder eines Fahrzeugs mittels Dämpfern zu verbinden, über die sich die Räder an einer Fahrzeugkarosserie abstützen können. Die Dämpfer erzeugen Dämpfungskräfte, welche die zwischen den Fahrzeugrädern und der Fahrbahn wirkenden Kräfte beeinflussen.

Ferner ist es bekannt, sogenannte geregelte oder adaptive Dämpfer vorzusehen, bei denen die erzeugten Dämpfungskräfte während des Fahrbetriebs variabel einstellbar sind. Beispielsweise kann ein Fahrer ein Dämpfungsverhalten aus einer Mehrzahl von Auswahlmöglichkeiten auswählen, beispielsweise ein sportliches oder komfortables Dämpfungsverhalten. Je nach Fahrsituation werden in Abhängigkeit dieser Auswahl die zu erzeugenden Dämpfungskräfte ermittelt und per Regelung eingestellt. Diese Regelung beschränkt sich jedoch auf die korrekte Umsetzung der vorgegebenen Dämpfungskräfte durch die einzelnen Dämpfer. Beispielsweise wird im Rahmen dieser Regelung sichergestellt, dass eine vorgegebene Stromänderung oder eine anderweitige Betriebsgröße der Dämpfer, die zum Erzeugen der gewünschten Dämpfungskräfte anzupassen ist, tatsächlich umgesetzt wird. Die einzustellende Dämpfungskraft wird in der Regel anhand von Kennlinien ermittelt, die als Eingangsgrößen Fahrdynamikgrößen von Aufbausensoren des Fahrzeugs erhalten können.

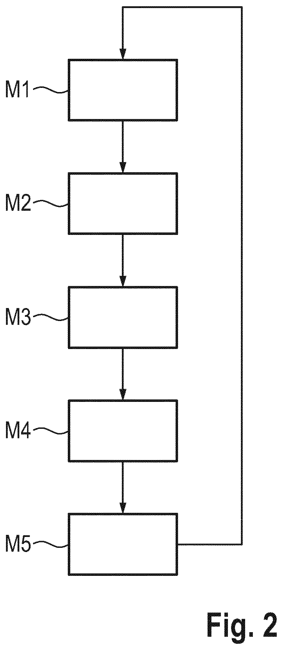

Weiterer Hintergrund zu entsprechenden Dämpfersystemen finden sich in der DE 10 2018 203 182 A1. Darüber hinaus offenbart die DE 10 2018 203 182 A1 eine Lösung zur Beeinflussung der Fahrzeugquerdynamik und genauer gesagt zur Giermomentenerzeugung mittels adaptiver Dämpfer. Insbesondere anhand der dortigen Figur 4 wird gelehrt, dass die Dämpferkräfte infolge von Wankbewegungen des Fahrzeugaufbaus die entstehenden Radlasten beeinflussen, wodurch auch die von den Rädern übertragbaren Querkräfte einstellbar sind. Ferner wird im Zusammenhang mit der dortigen Figur 2 aufgezeigt, dass mit spezifischen Verteilungen von Radlasten auf unterschiedliche Fahrzeugräder mittels der Dämpfer die insgesamt an den Fahrzeugrädern auftretenden Querkräfte maximierbar sind. Dies verbessert die Fahrstabilität.

Es hat sich jedoch gezeigt, dass nach wie vor Verbesserungspotenzial bei dieser oder bei anderweitigen Beeinflussungen einer Fahrdynamik und insbesondere einer Querdynamik besteht. Dies gilt insbesondere in fahrdynamischen Grenzbereichen.

Aus der DE 10 2004 040 876 A1 ist ein gattungsgemäßes Verfahren zur Fahrdynamikregelung eines Fahrzeugs mittels Dämpfen bekannt. Ein ähnliches Verfahren ist aus der US 2006/074533 A1 bekannt.

Die US 2008/183353 A1 offenbart ein kooperatives aktives Dämpfungssystem (ADS), das die ADS-Dämpfungskraftverteilung während des Bremsvorgangs anpasst, um die Bremsweichheit und -stabilität zu verbessern, wobei zur Abmilderung eines Übersteuerungsvorganges die vorderen Dämpfer weicher und die hinteren Dämpfer versteift würden.

Eine Aufgabe der vorliegenden Lösung ist es daher, die Zuverlässigkeit und Effektivität einer Fahrdynamikbeeinflussung mittels den Dämpfern eines Fahrzeugs zu verbessern.

Diese Aufgabe wird durch die Gegenstände der beigefügten unabhängigen Ansprüche gelöst. Vorteilhafte Weiterbildungen finden sich in den abhängigen Ansprüchen. Sämtliche der vorstehenden Erläuterungen, Merkmale und Weiterbildungen können auf die vorliegende Lösung ebenso zutreffen bzw. bei dieser vorgesehen sein, sofern nicht anders angegeben oder ersichtlich.

Es wurde erkannt, dass insbesondere in fahrdynamischen Grenzbereichen die Einflüsse der Dämpfer auf die Fahrdynamik nur bedingt modellierbar bzw. vorhersagbar sind. Entsprechend ist mit den bisherigen Ansätzen die Fahrdynamik nicht immer in der gewünschten Weise zuverlässig beeinflussbar. Die hier offenbarte Lösung sieht daher vor, eine zu beeinflussende Dynamikgröße zu regeln und dafür den Dämpfer als ein Stellglied zu verwenden.

Dies unterscheidet sich von bisherigen Ansätzen, bei denen die Dynamikgröße zum Beispiel per Kennlinie lediglich zur Ermittlung einer vom Dämpfer einzustellenden Dämpferkraft verwendet wird (hierin auch gleichbedeutend als Dämpfungskraft bezeichnet). Dabei wird meist von einem feststehenden bzw. allgemeingültigen Zusammenhang zwischen Dämpferkraft und Dynamikgröße ausgegangen. Folglich wird es als ausreichend angesehen, einzustellende Dämpferkräfte per Steuerung vorzugeben, ohne deren tatsächliche Auswirkungen auf die Fahrdynamik gesondert zu erfassen und zu berücksichtigen. Vorliegend wurde erkannt, dass derartige feststehende Zusammenhang zwischen Dämpfer Kraft und Dynamik insbesondere in fahrdynamischen Grenzbereichen nicht immer zutreffen können und allgemein schwer zu modellieren sind.

Mit der hierin offenbarten Lösung wird ermöglicht, per Regelung zu überprüfen bzw. zu gewährleisten, dass eine im Sinne einer Führungsgröße vorgegebene Soll-Dynamikgröße durch die adaptiven Dämpfer des Fahrzeugs tatsächlich umgesetzt wird. Hierfür kann eine Ist-Dynamikgröße ermittelt werden, die sich infolge der adaptiven Dämpfungskräfte einstellt. Die Ist-Dynamikgröße kann von der Soll-Dynamikgröße zum Ermitteln einer Regelabweichung subtrahiert werden. Diese Regelabweichung kann zum Ermitteln und/oder zum Aktualisieren einer vom Dämpfer umzusetzenden Stellgröße verwendet werden. Dies entspricht dem Bilden einer Regelschleife mit dem Ziel, die Ist-Dynamikgröße der Soll-Dynamikgröße durch Verwenden der Dämpfer als ein Stellglied anzupassen.

Allgemein ausgedrückt sieht die hierin offenbarte Lösung vor, eine Abweichung zwischen einem Soll- und Ist-Fahrzustand (insbesondere einer Soll- und Ist-Dynamikgröße) zu ermitteln und die Dämpfer eines Fahrzeugs in Abhängigkeit von dieser Abweichung derart einzustellen, dass diese Abweichung reduziert wird. Hierdurch kann die Fahrstabilität verbessert werden, insbesondere wenn die Soll-Dynamikgröße das Bereitstellen einer entsprechend erhöhten Stabilität ermöglicht bzw. für diesen Zweck ermittelt wurde.

Insbesondere wird ein Verfahren zur Fahrdynamikregelung (insbesondere Querdynamikregelung und ferner insbesondere des Gierverhaltens) eines Fahrzeugs mittels (insbesondere adaptiver, geregelter und/oder ansteuerbarer) Dämpfern vorgeschlagen (welche zum Beispiel zum Erzeugen von Wank-Giermomenten geregelt werden), wobei das Fahrzeug eine Mehrzahl von Rädern umfasst (insbesondere wenigstens vier), die jeweils mit einem Dämpfer verbunden sind (und sich hierüber zum Beispiel an der Fahrzeugkarosserie abstützen). Genauer gesagt umfasst das Fahrzeug wenigstens zwei Achsen (insbesondere eine Vorderachse und eine Hinterachse), die jeweils wenigstens zwei Räder und (hiermit verbundene) Dämpfer aufweisen (bevorzugt einer je Rad). Das Verfahren weist dabei folgende Regelung oder, anders ausgedrückt, das Bilden folgender Regelschleife auf:
a) Erhalten einer Fahrdynamik-Sollgröße;
b) Ermitteln einer Regelabweichung anhand oder basierend auf der Fahrdynamik-Sollgröße und einer Fahrdynamik-Istgröße;
c) Ändern der Dämpferkraft (oder auch Dämpfungskraft) wenigstens eines Dämpfers nach Maßgabe der Regelabweichung;
d) (insbesondere Aktualisieren und) Rückführen der Fahrdynamik-Istgröße bei geänderter Dämpferkraft zum erneuten Ermitteln der Regelabweichung.

Die rückgeführte Fahrdynamik-Istgröße weist aufgrund der geänderten Dämpferkraft einen erwartungsgemäß geänderten Wert auf, d. h. entspricht erwartungsgemäß nicht derjenigen Istgröße, anhand derer vormals die Regelabweichung bestimmt wurde.

Das erneute Ermitteln der Regelabweichung kann umfassen oder nach sich ziehen, dass auch Maßnahme a) erneut ausgeführt wird, wenigstens aber die Maßnahmen b) und c). Dies kann so oft wiederholt werden, bis die Regelabweichung zu null wird oder aber, bevorzugt, bis die Fahrdynamikregelung deaktiviert wird. Insbesondere kann vorgesehen sein, die Fahrdynamikregelung über einen längeren Zeitraum zu aktivieren und dabei fortlaufend und/oder wiederholt die vorstehend geschilderte Abfolge auszuführen. Insbesondere kann dabei auch die Fahrdynamik-Sollgröße wiederholt aktualisiert und mit der rückgeführten Fahrdynamik-Istgröße zum Bestimmen der Regelabweichung verrechnet werden.

Das Erhalten der Fahrdynamik-Sollgröße kann auch ein Ermitteln dieser Größe umfassen. Die Ermittlung kann aber auch separat erfolgen (zum Beispiel von einer separaten Einheit und/oder allgemein außerhalb des beanspruchten Verfahrens) und die Größe kann als ein Endresultat dieser Ermittlung übermittelt oder ausgegeben und dadurch erhalten werden. Zum Ermitteln der Fahrdynamik-Sollgröße können Kennfelder oder Fahrzeugmodelle zum Einsatz kommen, wie sie zum Beispiel auch in der DE 10 2018 203 182 A1 erwähnt werden (siehe dort [0021] unter zusätzlicher Verwendung eines Lenkwinkels als Eingangsgröße).

Es versteht sich, dass sich die Fahrdynamik-Sollgröße und -Istgröße bevorzugt auf einer gleichartige Fahrdynamikgröße beziehen. Allgemein kann es sich bei dieser Fahrdynamikgröße um eine Querdynamikgröße handeln. Gemäß einem Beispiel ist die Fahrdynamikgröße der Schwimmwinkel. Gemäß einem anderen Beispiel handelt es sich um die Gierrate. Es könnten alternativ auch zeitliche Ableitungen jeglicher hierin genannter beispielhafter Fahrdynamikgrößen betrachtet werden.

Der Zusammenhang zwischen den Fahrdynamikgrößen bzw. einer vorliegenden Regelabweichung und einer einzustellenden Dämpferkraft kann anhand jeglicher bekannter Ansätze aus dem Stand der Technik definiert sein. Beispielsweise können hierfür Kennlinien oder Rechenmodelle hinterlegt werden. Aus der DE 10 2018 203 182 A1 sind die geschilderten Zusammenhänge bekannt, wonach über die Dämpferkräfte Radquerkkräfte einstellbar und hierüber dann zum Beispiel das Gierverhalten bzw. die Gierrate als eine Dynamikgröße des Fahrzeugs beeinflussbar ist.

Nachstehend werden als weitere Beispiele auch noch Zusammenhänge zwischen den Dämpferkräften und einem Übersteuern oder Untersteuern beschrieben, wobei das Übersteuern oder Untersteuern ebenfalls einer Fahrdynamikgröße entspricht bzw. anhand von Fahrdynamikgrößen ermittelbar ist.

Die Dämpfer können zum Ändern der Dämpferkraft eigene Regelungen bzw. Regelschleifen aufweisen, wie sie vorstehend erläutert worden. Insbesondere kann eine Dämpferkraft als einzustellende Sollgröße erhalten und/oder vorgegeben werden. Anschließend kann sozusagen per interner Dämpferregelung und/oder beispielsweise durch Anpassen von elektrischen Betriebsgrößen sichergestellt werden, dass diese Dämpferkraft tatsächlich umgesetzt wird. Eine Regelgeschwindigkeit bzw. -frequenz der Dämpfer kann dabei höher sein als eine Regelgeschwindigkeit der Fahrdynamik bzw. der vorstehend geschilderten übergeordneten Regelschleife.

Zusammengefasst kann also nach Art einer Kaskadenregelung eine Regelung der Dämpferkraft durch die Dämpfer in die übergeordnete Fahrdynamikregelung eingebettet werden. Dies erhöht die Zuverlässigkeit und die Güte beim Umsetzen der gewünschten Fahrdynamikanpassung.

Allgemein kann ein Verfahren gemäß jeglichem hierin geschilderten Aspekt computergestützt ausgeführt werden. Insbesondere kann es mittels einer Regeleinrichtung (insbesondere bereitgestellt durch ein Steuergerät mit Regelfunktion) der nachstehend erläuterten ausgeführt werden. Die hierin geschilderten Regelfunktionen bzw. Regelschleifen können durch Algorithmen und/oder Programmanweisungen umgesetzt werden bzw. als solche definiert sein. Diese können von der Regeleinrichtung (insbesondere einem Prozessor hiervon) ausgeführt werden.

Die Fahrdynamikgröße kann ein Untersteuern oder Übersteuern des Fahrzeugs beschreiben. Anders ausgedrückt kann ein Untersteuern oder Übersteuern des Fahrzeugs anhand der Fahrdynamikgröße ermittelbar sein. Beispielsweise kann die Fahrdynamikgröße eine Gierrate sein. Die Regelabweichung kann demnach einer Gierratenabweichung zwischen Soll- und Ist-Gierrate entsprechen. Ist diese Abweichung positiv, kann ein Übersteuern vorliegen. Ist sie negativ, kann ein Untersteuern vorliegen und.

Insbesondere sieht die Erfindung vor, dass bei einem Untersteuern (also beispielsweise wenn die Fahrdynamikgröße eine Gierrate ist und/oder eine Gierratenabweichung der vorstehenden Art negativ ist) die Dämpferkräfte an einer Vorderachse erhöht werden und/oder die Dämpferkräfte an einer Hinterachse reduziert werden. Diese Anpassung der Dämpferkräfte kann über eine achsindividuelle Einstellung erfolgen. Sie kann aber auch über eine radindividuelle Einstellung erfolgen, bei denen die Dämpferkräfte an den Rädern der Achsen individuell eingestellt werden, aber an der Vorderachse jeweils individuell erhöht und/oder an der Hinterachse jeweils individuell reduziert werden.

Es hat sich gezeigt, dass mit einer entsprechenden Anpassung der Dämpferkräfte ein Untersteuern insbesondere im fahrdynamischen Grenzbereich zuverlässig begrenzt werden kann.

Zusätzlich ist vorgesehen sein, dass bei einem Übersteuern (also beispielsweise wenn die Fahrdynamikgröße eine Gierrate ist und/oder eine Gierratenabweichung der vorstehenden Art positiv ist) die Dämpferkräfte an der Vorderachse reduziert werden und/oder die Dämpferkräfte an der Hinterachse erhöht werden. Diese Anpassung der Dämpferkräfte kann erneut über eine achsindividuelle Einstellung erfolgen. Sie kann aber auch über eine radindividuelle Einstellung erfolgen, bei denen die Dämpferkräfte an den Rädern der Achsen individuell eingestellt werden, aber an der Vorderachse jeweils individuell reduziert und/oder an der Hinterachse jeweils individuell erhöht werden.

Es hat sich gezeigt, dass mit einer entsprechenden Anpassung der Dämpferkräfte ein Übersteuern insbesondere im fahrdynamischen Grenzbereich zuverlässig begrenzt werden kann.

Eine Weiterbildung sieht vor, dass die Fahrdynamik-Istgröße sensorisch gemessen und/oder modellbasiert ermittelt wird. Beispielsweise kann eine Gierrate als Fahrdynamikgröße mittels eines Gierratensensors bestimmt werden. Hingegen wird ein Schwimmwinkel als Fahrdynamikgröße bevorzugt modellbasiert und somit rechnerisch ermittelt.

Eine weitere Ausführungsform sieht vor, dass zum Ändern der Dämpferkraft eine Sollgröße betreffend die Dämpferkraft an ein Dämpfersteuergerät (für den wenigstens einen Dämpfer dessen Regelkraft zu ändern ist) ausgegeben wird. Das Dämpfersteuergerät stellt bevorzugt eine Regelfunktion und insbesondere einen Dämpferregler bereit. Dies ermöglicht insbesondere die vorstehend geschilderte Variante einer inneren Dämpfer-Regelschleife nach Art einer Kaskadenregelung. Der Dämpferregler kann zum Beispiel ein von dem Dämpfersteuergerät ausgeführtes Softwaremodul oder eine Softwarefunktion zum Ansteuern eines Dämpfers sein.

Insbesondere kann die Sollgröße eine Soll-Dämpferkraft sein, die das Dämpfersteuergerät zum Beispiel unter Verwendung von Kennlinien, einem Rechenmodell oder anderweitigen bekannten Ansätzen verwendet, um eine erforderliche Stromänderung oder anderweitige Betriebsgrößenänderung zum Ansteuern des Dämpfers zu ermitteln, damit die Soll-Dämpferkraft umgesetzt wird. Zur Regelung kann eine Ist-Dämpferkraft oder Ist-Betriebsgröße rückgeführt werden.

Weiter kann vorgesehen sein, dass die Dämpferkraft radindividuell geändert wird. Hierfür kann jegliche hierin geschilderte Regelung bzw. Regelschleife radindividuell durchgeführt werden. Insbesondere können radindividuell einzustellende Fahrdynamik-Sollgrößen ermittelt werden. Alternativ kann vorgesehen sein, zum Beispiel in Anbetracht einer Regelabweichung radindividuell einzustellende Dämpferkräfte zum Reduzieren dieser Regelabweichung zu ermitteln.

Allgemein formuliert kann also die Stellgrößenbestimmung radindividuell erfolgen, nicht aber zwingend die Ermittlung der Regelabweichung und/oder der Soll-Dynamikgröße. Letztere kann zum Beispiel bezogen auf das Gesamtfahrzeug definiert und/oder vorgegeben sein. Für die Umrechnung oder auch Übersetzung der Regelabweichung in radindividuelle Stellgrößen kann auf Rechenmodelle zurückgegriffen werden, wie sie zum Beispiel in der DE 10 2018 203 182 A1 im Zusammenhang mit radinviduellen Querkräften und deren Einfluss auf eine übergeordnete Querdynamik des Fahrzeugs geschildert sind.

Ein Vorteil der radindividuellen Einstellung ist eine höhere Genauigkeit bei der Fahrdynamikbeeinflussung.

Alternativ kann vorgesehen sein, wobei die Dämpferkraft achsindividuell geändert wird d. Hierunter kann verstanden werden, dass für sämtliche Dämpfer einer Achse gleichartige (beispielsweise prozentuale oder relative) Änderungen oder gleichartige (beispielsweise absolute) Einstellungen der Dämpferkraft ermittelt und dann entsprechend umgesetzt werden. Allerdings können sich diese Dämpferkräfte bzw. Änderungen oder Einstellungen von denjenigen an einer anderen Achse unterscheiden.

Ein Vorteil der achsindividuellen Einstellung ist eine höhere Regelgeschwindigkeit bei der Fahrdynamikbeeinflussung, da der Rechenaufwand gegenüber der radindividuellen Variante geringer ausfallen kann.

Gemäß einer weiteren allgemeinen Ausführungsform wird die Änderung der Dämpferkraft in Abhängigkeit von der Fahrgeschwindigkeit und/oder der Querbeschleunigung ermittelt. Insbesondere kann die Dämpferkraft mittels einer Kennlinie oder eines Kennfeldes bestimmt werden, welche in Abhängigkeit von wenigstens einer der genannten Größen definiert sind. Beispielsweise kann je nach vorliegender Regelabweichung, je nach aktueller Fahrgeschwindigkeit und/oder je nach sensorisch oder modellbasiert ermittelter Querbeschleunigung die daraufhin einzustellende Dämpferkraft ermittelt werden. Erneut kann dies radindividuell oder achsindividuell erfolgen.

Die Erfindung betrifft auch ein Fahrzeug (insbesondere ein Kraftfahrzeug und ferner insbesondere einen Personenkraftwagen oder Lastkraftwagen), mit wenigstens zwei Achsen (zum Beispiel einer Vorder- und Hinterachse), die jeweils wenigstens zwei Räder samt Dämpfern (genauer gesagt mit jeweils einem Dämpfer) aufweisen, und mit einer Regeleinrichtung, die dazu eingerichtet ist:
- eine Fahrdynamikregelung des Fahrzeugs ausschließlich mittels der Dämpfer auszuführen und dazu eine Fahrdynamik-Sollgröße zu ermitteln:
- eine Regelabweichung anhand der Fahrdynamik-Sollgröße und einer Fahrdynamik-Istgröße zu ermitteln;
- darauf basierend eine Vorgabe betreffend eine Änderung der Dämpferkraft wenigstens eines Dämpfers zu ermitteln und/oder auszugeben (z.B. in Form eines neuen Sollwerts von oder einer Änderungsvorgabe für die Dämpferkraft) ; und
- die (beispielsweise sich daraufhin einzustellende und/oder resultierende) Regelabweichung auf Basis der Fahrdynamik-Istgröße bei geänderter Dämpferkraft erneut zu ermitteln (und, mit anderen Worten, dadurch zu aktualisieren).

Die Regeleinrichtung ist weiter derart ausgebildet, dass bei einem Untersteuern die Dämpferkräfte an einer Vorderachse erhöht werden und/oder die Dämpferkräfte an einer Hinterachse reduziert werden und dass bei einem Übersteuern die Dämpferkräfte an einer Vorderachse reduziert werden und/oder die Dämpferkräfte an einer Hinterachse erhöht werden.

Die Regeleinrichtung kann durch ein Steuergerät des Fahrzeugs mit einer entsprechenden Regelfunktion bereitgestellt werden. Die Regeleinrichtung kann wenigstens einen Prozessor umfassen und/oder wenigstens eine Speichereinrichtung. In der Speichereinrichtung können Programmanweisungen hinterlegt sein, die bei Ausführung durch den Prozessor die Regeleinrichtung dazu veranlassen, jegliche hierin geschilderten Funktionen, Betriebszustände oder Maßnahmen bereitzustellen.

Allgemein kann das Fahrzeug und insbesondere dessen Regeleinrichtung jegliche weiteren Merkmale umfassen, um sämtliche hierin geschilderten Betriebszustände, Funktionen und Effekte bereitzustellen. Insbesondere können sämtliche Erläuterungen zu und Weiterbildungen von Verfahrensmerkmalen auch auf die gleichlautenden oder gleichartigen Merkmale des Fahrzeugs und insbesondere dessen Regeleinrichtung zutreffen bzw. bei diesem vorgesehen sein. Allgemein kann das Fahrzeug und insbesondere dessen Regeleinrichtung dazu eingerichtet sein, ein Verfahren gemäß jeglichem hierin geschilderten Aspekt auszuführen.

Die Erfindung betrifft auch eine Regeleinrichtung für ein Fahrzeug nach dem vorangehenden Aspekt.

Ausführungsbeispiele der Erfindung werden im Folgenden anhand der beigefügten schematischen Figuren erläutert.
- Figur 1: zeigt eine Fahrdynamikregelung eines Fahrzeugs gemäß einem Ausführungsbeispiel in schematischer Darstellung.
- Figur 2: zeigt ein Ablaufschema eines Verfahrens gemäß einem Ausführungsbeispiel, das von dem Fahrzeug bzw. dessen Fahrdynamikregelung aus Figur 1 ausgeführt wird.

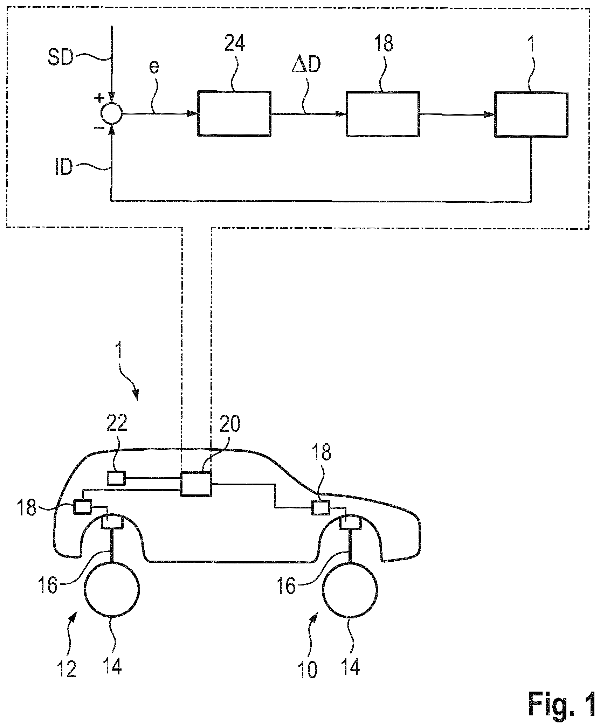

In Figur 1 ist ein beispielhaftes Fahrzeug 1 in einer stark vereinfachten Seitenansicht gezeigt. Das Fahrzeug 1 umfasst eine Vorderachse 10 und eine Hinterachse 12. An diesen sind jeweils zwei Fahrzeugräder 14 angeordnet, von denen je Achse 10, 12 eines in der gezeigten Ansicht verdeckt ist.

Die Fahrzeugräder 14 sind jeweils mit adaptiven Dämpfern 16 herkömmlicher Bauart verbunden. Genauer gesagt sind sie über die Dämpfer 16 mit der Fahrzeugkarosserie verbunden und stützen sich über die Dämpfer 16 an der Fahrzeugkarosserie ab. Nicht gezeigt ist, dass die Dämpfer 16 in ein Feder-Dämpfer-System eingebettet sind.

Jeder Dämpfer 16 weist ein Dämpfersteuergerät 18 auf. Das Dämpfersteuergerät 18 stellt eine Regelfunktion bereit bzw. bildet einen Dämpferregler. Es ist dazu eingerichtet, eine erhaltene Soll-Dämpferkraft für einen dazugehörigen Dämpfer 16 durch Anpassen von elektrischen Größen dieses Dämpfers 16 und insbesondere durch Stromänderungen einzustellen und bevorzugt einzuregeln.

Gezeigt ist ferner eine Regeleinrichtung 20 des Fahrzeugs 1. Diese kann durch ein digitales und/oder elektrisch betreibbares Steuergerät bereitgestellt werden oder als ein solches implementiert sein. Die Regeleinrichtung 20 ist über Datenleitungen und bevorzugt über einen nicht gesondert dargestellten Kommunikationsbus mit den Dämpfersteuergeräten 18 eines jeden Dämpfers 16 verbunden.

Vergrößert dargestellt ist ein schematischer Regelkreis bzw. eine Regelschleife, die durch die Regeleinrichtung 20 implementiert wird. Demnach erhält (oder bevorzugt ermittelt) die Regeleinrichtung 20 einer Soll-Dynamikgröße SD. Lediglich beispielhaft handelt es sich hierbei vorliegend um eine Gierrate des Fahrzeugs 1, die beispielsweise mittels herkömmlicher modellbasierter Ansätze ermittelbar ist.

Weiter erhält oder bevorzugt ermittelt die Regeleinrichtung 20 auch eine Ist-Dynamikgröße ID, wobei es sich im gezeigten Fall erneut um die Gierrate das Fahrzeugs 1 handelt. Diese kann sensorisch mittels eines Gierratensensors 22 ermittelt werden, der mit der Regeleinrichtung 20 verbunden ist.

Durch Bilden der Differenz von Soll-Dynamikgröße SD und Ist-Dynamikgröße ID wird eine Regelabweichung e bestimmt. Da die beispielhaft betrachtete Fahrdynamikgröße die Gierrate ist, entspricht die Regelabweichung e einer Gierratenabweichung. Diese bildet in der vorstehend geschilderten Weise durch ihr Vorzeichen ein Untersteuern oder Übersteuern ab, das im Rahmen der Fahrdynamikregelung durch die Regeleinrichtung 20 reduziert wird.

Die Regelabweichung e wird einer Stellgrößenermittlungsfunktion 24 zugeführt. Die Stellgrößenermittlungsfunktion 24 bildet Zusammenhänge zwischen der Stellgröße (im vorliegenden Fall einer Dämpferkraft) und der Regelabweichung e ab, insbesondere in der Weise, dass Änderungen oder Werte der Stellgröße ermittelbar sind, um die Regelabweichung e zu reduzieren. Erneut können derartige Zusammenhänge modellbasiert definiert sein oder ermittelt werden. Ein Zusammenhang zwischen einer Gierrate und den Dämpferkräften existiert in der vorstehend geschilderten Weise beispielsweise durch die nach Maßgabe der Dämpferkräfte erzeugbaren Rad-Querkräfte, welche insbesondere bei einem Wanken das Fahrzeugs 1 das Gierverhalten beeinflussen.

Im gezeigten Beispiel erfolgt die Stellgrößenbestimmung achsindividuell. Genauer gesagt wird je Achse 10, 12 die bei den dortigen Dämpfern 16 jeweils vorzunehmende relative Änderung der Dämpferkraft D oder aber ein neuer Sollwert der Dämpferkraft D bestimmt, um die Regelabweichung e zu reduzieren. Diese relative Änderung und der Sollwert sind jeweils Beispiele für von der Regeleinrichtung 20 erzeugter Vorgaben betreffend eine gewünschte bzw. erforderliche Änderung der Dämpferkraft D.

Bei der Stellgrößenbestimmung wird zunächst festgestellt, ob die Regelabweichung e aktuell ein Übersteuern oder Untersteuern anzeigt, was in der vorstehend geschilderten Weise durch Überprüfen von dessen Vorzeichen erfolgen kann. Anschließend können jegliche der achsindividuellen Änderungen der Dämpferkraft D zum Reduzieren des Übersteuerns oder Untersteuerns vorgegeben werden, wie sie vorstehend im allgemeinen Beschreibungsteil erläutert wurden.

Nicht gesondert gezeigt ist, dass im Rahmen der Stellgrößenbestimmung auch die Fahrzeuggeschwindigkeit oder eine Querbeschleunigung berücksichtigt werden kann. Diese Größen kann die Regeleinrichtung 20 von im Fahrzeug 1 vorhandenen Sensoren erhalten.

Wie schematisch angedeutet, wird die vorzunehmende Änderung der Dämpferkraft D (alternativ ein absoluter Sollwert der Dämpferkraft D) an die Dämpfersteuergeräte 18 ausgegeben. Lediglich aus Anschauungsgründen ist innerhalb des Regelungsschemas nur eine Dämpferkraft D und ein Dämpfersteuergerät 18 abgebildet. Die Dämpfersteuergeräte 18 der Dämpfer 16 einer gemeinsamen Achse 10, 12 erhalten infolge der achsindividuellen Änderungen dieselben Vorgaben von der Stellgrößenermittlungsfunktion 24.

Die Dämpfersteuergeräte 18 können bevorzugt im Rahmen einer vorstehend geschilderten eigenen Regelschleife die Dämpferkraft D bzw. dessen Änderung zum Beispiel durch Anpassen und insbesondere Regeln der jeweiligen Dämpferströme einregeln. Dies wirkt sich auf das Fahrdynamikverhalten der Regelstrecke aus, welche im vorliegenden Fall das Fahrzeug 1 ist. Das Fahrdynamikverhalten wird dabei durch die geschilderte Ist-Dynamikgröße ID erfasst. Letztere wird fortlaufend nach Art einer herkömmlichen Regelung aktualisiert und somit auch nach Einstellen der geänderten Dämpferkaft D mittels der Dämpfersteuergeräte 18. Auf diese Weise können fortlaufend die Auswirkungen der Änderungen der Dämpferkräfte D auf die Regelabweichung e ermittelt werden und kann die Regelabweichung e durch kontinuierliches Anpassen und Nachregeln der Dämpferkräfte D reduziert werden.

Insgesamt erfolgt somit eine Regelung der Fahrdynamik des Fahrzeugs 1 und im gezeigten Beispiel eine Regelung von dessen Gierverhalten, wobei als Stellglieder die Dämpfer 18 und als Stellgröße die hiervon erzeugten Dämpferkräfte D bzw. deren Änderung verwendet werden. In Abweichung vom Stand der Technik wird dabei mittels der Regelung überprüft und sichergestellt, dass die Anpassungen des Dämpfungsverhaltens tatsächlich in der gewünschten Beeinflussung der Fahrdynamik resultieren.

Figur 2 zeigt ein Ablaufschema eines Verfahrens, wie es von dem Fahrzeug 1 in der geschilderten Weise umgesetzt wird. Im Rahmen einer Maßnahme M1 wird die Soll-Dynamikgröße SD erhalten und/oder ermittelt. Im Rahmen einer Maßnahme M2 wird die Regelabweichung e anhand der Soll-Dynamikgröße SD und einer bevorzugt sensorisch gemessenen Ist-Dynamikgröße ID bestimmt.

Im Rahmen einer Maßnahme M3 werden Änderungen der Dämpferkräfte D als Stellgrößen ermittelt, um die Regelabweichung e zu reduzieren. Im Rahmen einer Maßnahme M4 werden diese Dämpferkräfte D durch die Dämpfersteuergeräte 18 jeweils eingeregelt. Als Maßnahme M5 wird eine sich daraufhin einstellende Ist-Dynamikgröße ID ermittelt bzw. wird ein aktueller Wert der Ist-Dynamikgröße ID ermittelt. Ferner wird die Ist-Dynamikgröße ID rückgeführt, um bei einem erneuten Durchlaufen der Maßnahmen M1-M5 im Rahmen der Maßnahme M2 als neue bzw. aktuelle Ist-Dynamikgröße ID zum Ermitteln der Regelabweichung e berücksichtigt zu werden. Die Maßnahme M1 wird bevorzugt nur dann wiederholt, wenn sich die Soll-Dynamikgröße SD geändert hat. Allgemein kann diese Regelschleife solange wiederholt werden, bis eine Fahrdynamikregelung deaktiviert wird.

### Bezugszeichenliste

- 1: Fahrzeug
- 10: Vorderachse
- 12: Hinterachse
- 14: Fahrzeugrad
- 16: Dämpfer
- 18: Dämpfersteuergerät
- 20: Regeleinrichtung
- 22: Gierratensensor
- 24: Stellgrößenermittlungsfunktion
- SD: Soll-Dynamikgröße
- ID: Ist-Dynamikgröße
- e: Regelabweichung

## Patentansprüche

1. Verfahren zur Fahrdynamikregelung eines Fahrzeugs (1) ausschließlich mittels Dämpfern (16),
wobei das Fahrzeug (1) wenigstens zwei Achsen (10, 12) umfasst, die jeweils wenigstens zwei Räder (14) mit jeweils einem Dämpfer (16) aufweisen, und wobei das Verfahren folgende Regelung aufweist:
a) Erhalten einer Fahrdynamik-Sollgröße (SD);
a) Ermitteln einer Regelabweichung (e) anhand der Fahrdynamik-Sollgröße (SD) und einer Fahrdynamik-Istgröße (ID);
b) Ändern der Dämpferkraft (D) wenigstens eines Dämpfers (16) nach Maßgabe der Regelabweichung (e);
c) Aktualisieren und Rückführen der Fahrdynamik-Istgröße (ID) bei geänderter Dämpferkraft (D) zum erneuten Ermitteln der Regelabweichung (e),
**dadurch gekennzeichnet, dass**
bei einem Untersteuern die Dämpferkräfte (D) an einer Vorderachse (10) erhöht werden und/oder die Dämpferkräfte (D) an einer Hinterachse (12) reduziert werden und dass bei einem Übersteuern die Dämpferkräfte (D) an einer Vorderachse (10) reduziert werden und/oder die Dämpferkräfte (D) an einer Hinterachse (12) erhöht werden.

2. Verfahren nach Anspruch 1,
**dadurch gekennzeichnet, dass** die Fahrdynamik-Istgröße (ID) sensorisch gemessen und/oder modellbasiert ermittelt wird.

3. Verfahren nach Anspruch 1 oder 2,
**dadurch gekennzeichnet, dass** zum Ändern der Dämpferkraft (D) eine Sollgröße betreffend die Dämpferkraft (D) an ein Dämpfersteuergerät (16) ausgegeben wird.

4. Verfahren nach einem der vorangehenden Ansprüche,
**dadurch gekennzeichnet, dass** die Dämpferkraft (D) radindividuell geändert wird.

5. Verfahren nach einem der Ansprüche 1 bis 3,
**dadurch gekennzeichnet, dass** die Dämpferkraft (D) achsindividuell geändert wird.

6. Verfahren nach einem der vorangehenden Ansprüche,
**dadurch gekennzeichnet, dass** die Änderung der Dämpferkraft (D) abhängig von einer Fahrgeschwindigkeit und/oder einer Querbeschleunigung ist.

7. Fahrzeug (1), mit wenigstens zwei Achsen (10, 12), die jeweils wenigstens zwei Räder (14) mit jeweils einem Dämpfer (16) aufweisen, und mit einer Regeleinrichtung (20), die dazu eingerichtet ist:
• eine Fahrdynamikregelung des Fahrzeugs (1) ausschließlich mittels der Dämpfer (16) auszuführen und dazu eine Fahrdynamik-Sollgröße (SD) zu ermitteln:
• eine Regelabweichung (e) anhand der Fahrdynamik-Sollgröße (SD) und einer Fahrdynamik-Istgröße (ID) zu ermitteln;
• darauf basierend eine Vorgabe betreffend eine Änderung der Dämpferkraft (D) wenigstens eines Dämpfers (16) zu ermitteln; und
• die Regelabweichung (e) auf Basis der Fahrdynamik-Istgröße (ID) bei geänderter Dämpferkraft (D) erneut zu ermitteln,
**dadurch gekennzeichnet, dass**
die Regeleinrichtung (20) derart ausgebildet ist, dass bei einem Untersteuern die Dämpferkräfte (D) an einer Vorderachse (10) erhöht werden und/oder die Dämpferkräfte (D) an einer Hinterachse (12) reduziert werden und dass bei einem Übersteuern die Dämpferkräfte (D) an einer Vorderachse (10) reduziert werden und/oder die Dämpferkräfte (D) an einer Hinterachse (12) erhöht werden.

8. Regeleinrichtung (20) die Mittel umfasst, die so angepasst sind, dass wenn die Regeleinrichtung in einem Fahrzeug (1) nach Anspruch 7 eingebaut ist, die Schritte des Verfahrens nach Anspruch 1 auszuführen.

## Claims

1. Method for controlling the driving dynamics of a vehicle (1) exclusively by means of dampers (16),
the vehicle (1) comprising at least two axles (10, 12), each having at least two wheels (14) each with a damper (16), and the method comprising the following control:
a) obtaining a driving dynamics target value (SD);
a) determining a control deviation (e) based on the driving dynamics target value (SD) and a driving dynamics actual value (ID);
b) changing the damper force (D) of at least one damper (16) according to the control deviation (e);
c) updating and feeding back the driving dynamics actual value (ID) when the damper force (D) changes to redetermine the control deviation (e),
**characterized in that**
in the event of understeering, the damper forces (D) on a front axle (10) are increased and/or the damper forces (D) on a rear axle (12) are reduced **and in that** in the event of oversteering, the damper forces (D) on a front axle (10) are reduced and/or the damper forces (D) on a rear axle (12) are increased.

2. Method according to claim 1,
**characterized in that** the driving dynamics actual value (ID) is measured by sensors and/or determined based on a model.

3. Method according to claim 1 or 2,
**characterized in that** to change the damper force (D), a target value relating to the damper force (D) is output to a damper control unit (16).

4. Method according to any of the preceding claims,
**characterized in that** the damper force (D) is changed individually for each wheel.

5. Method according to any of claims 1 to 3,
**characterized in that** the damper force (D) is changed individually for each axle.

6. Method according to any of the preceding claims,
**characterized in that** the change in the damper force (D) depends on a driving speed and/or a lateral acceleration.

7. Vehicle (1) comprising
at least two axles (10, 12), each having at least two wheels (14) each with a damper (16), and comprising a control device (20) which is designed:
• to control the driving dynamics of the vehicle (1) exclusively by means of the dampers (16) and to determine a driving dynamics target value (SD) for this purpose;
• to determine a control deviation (e) based on the driving dynamics target value (SD) and a driving dynamics actual value (ID);
• based thereon, to determine a specification relating to a change in the damper force (D) of at least one damper (16); and
• to redetermine the control deviation (e) based on the driving dynamics actual value (ID) with a changed damper force (D),
**characterized in that**
the control device (20) is designed such that in the event of understeering, the damper forces (D) on a front axle (10) are increased and/or the damper forces (D) on a rear axle (12) are reduced **and in that** in the event of oversteering, the damper forces (D) on a front axle (10) are reduced and/or the damper forces (D) on a rear axle (12) are increased.

8. Control device (20) comprising means adapted to carry out the steps of the method according to claim 1 when the control device is installed in a vehicle (1) according to claim 7.

## Revendications

1. Procédé de commande de la dynamique de conduite d'un véhicule (1) exclusivement au moyen d'amortisseurs (16),
dans lequel le véhicule (1) comprend au moins deux essieux (10, 12) qui présentent chacun au moins deux roues (14) comportant chacune un amortisseur (16), et dans lequel le procédé présente la commande suivante :
a) obtention d'une grandeur de consigne de la dynamique de conduite (SD) ;
a) détermination d'un écart de commande (e) à l'aide de la grandeur de consigne de la dynamique de conduite (SD) et d'une grandeur réelle de la dynamique de conduite (ID) ;
b) modification de la force d'amortissement (D) d'au moins un amortisseur (16) en fonction de l'écart de commande (e) ;
c) actualisation et renvoi de la grandeur réelle de la dynamique de conduite (ID) en cas de modification de la force d'amortissement (D) pour déterminer à nouveau l'écart de commande (e),
**caractérisé en ce que**
en cas de sous-virage, les forces d'amortissement (D) sur un essieu avant (10) sont augmentées et/ou les forces d'amortissement (D) sur un essieu arrière (12) sont réduites et **en ce que**, en cas de survirage, les forces d'amortissement (D) sur un essieu avant (10) sont réduites et/ou les forces d'amortissement (D) sur un essieu arrière (12) sont augmentées.

2. Procédé selon la revendication 1,
**caractérisé en ce que** la grandeur réelle de la dynamique de conduite (ID) est mesurée par des capteurs et/ou déterminée sur la base d'un modèle.

3. Procédé selon la revendication 1 ou 2,
**caractérisé en ce que,** pour modifier la force d'amortissement (D), une grandeur de consigne concernant la force d'amortissement (D) est délivrée à un appareil de commande d'amortisseur (16).

4. Procédé selon l'une des revendications précédentes,
**caractérisé en ce que** la force d'amortissement (D) est modifiée individuellement pour chaque roue.

5. Procédé selon l'une des revendications 1 à 3,
**caractérisé en ce que** la force d'amortissement (D) est modifiée individuellement pour chaque essieu.

6. Procédé selon l'une des revendications précédentes,
**caractérisé en ce que** la modification de la force d'amortissement (D) dépend d'une vitesse de déplacement et/ou d'une accélération transversale.

7. Véhicule (1), comportant
au moins deux essieux (10, 12), qui présentent respectivement au moins deux roues (14) comportant chacune un amortisseur (16), et comportant un dispositif de régulation (20) qui est conçu pour :
• réaliser une commande de la dynamique de conduite du véhicule (1) exclusivement au moyen des amortisseurs (16) et déterminer à cet effet une grandeur de consigne de la dynamique de conduite (SD) ;
• déterminer un écart de commande (e) à l'aide de la grandeur de consigne de la dynamique de conduite (SD) et d'une grandeur réelle de la dynamique de conduite (ID) ;
• déterminer sur cette base une indication concernant une modification de la force d'amortissement (D) d'au moins un amortisseur (16) ; et
• déterminer à nouveau l'écart de commande (e) sur la base de la grandeur réelle de la dynamique de conduite (ID) avec une force d'amortissement (D) modifiée,
**caractérisé en ce que**
le dispositif de commande (20) est conçu de telle sorte qu'en cas de sous-virage, les forces d'amortissement (D) sur un essieu avant (10) sont augmentées et/ou les forces d'amortissement (D) sur un essieu arrière (12) sont réduites et qu'en cas de survirage, les forces d'amortissement (D) sur un essieu avant (10) sont réduites et/ou les forces d'amortissement (D) sur un essieu arrière (12) sont augmentées.

8. Dispositif de commande (20) comprenant les moyens adaptés pour que, lorsque le dispositif de commande est installé dans un véhicule (1) selon la revendication 7, les étapes du procédé selon la revendication 1 sont réalisées.
